# FASCICULE DE BREVET EUROPEEN

(11) **EP 4 169 814 B1**
(45) Date de publication et mention de la délivrance du brevet: **28.02.2024**
(21) Numéro de dépôt: 22306538.4
(22) Date de dépôt: 12.10.2022
(51) Int. Cl.: B62D 25/16, B62D 53/06, B65D 88/12, B62D 25/18, B60P 1/64, B62D 33/04

(54) **VÉHICULE DE TRANSPORT COMBINÉ DE MARCHANDISES**
FAHRZEUG ZUM KOMBINIERTEN TRANSPORT VON GÜTERN
COMBINED CARGO TRANSPORT VEHICLE

(30) Priorité: 19.10.2021 FR 2111083
(43) Date de publication de la demande: 26.04.2023
(73) Titulaire: JEAN CHEREAU SAS, 50220 Ducey-les-Chéris (FR)
(72) Inventeur: RENOUF, Gildas, 50370 LE GRAND-CELLAND (FR); MARRIÈRE, Jérémy, 14240 AURSEULLES (FR)
(74) Mandataire: Casalonga

(56) Documents cités:
- EP-A1- 3 398 810
- DE-U1-202013 005 354
- FR-A1- 2 997 049
- US-A1- 2009 195 017

## Description

La présente invention concerne le domaine des véhicules de transport combiné de marchandises tels que des camions, des semi-remorques, des remorques ou des porteurs.

Par « transport combiné », on entend un transport combiné rail-route, un transport combiné rail-ferry, un transport combiné ferry-route ou encore un transport combiné rail-ferry-route.

L'espace de chargement intérieur d'une carrosserie de véhicule routier est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière.

De plus en plus de transporteurs, notamment en Europe, ont recours au transport combiné, notamment au transport combiné rail-route pour des raisons écologiques et de coûts de fonctionnement. Ce mode de transport signifie que les marchandises contenues dans l'espace de chargement de la carrosserie sont acheminées par route et par rail. Généralement, les transporteurs utilisent le réseau ferroviaire pour assurer la partie la plus longue du trajet et le réseau routier pour en amont et en aval.

Dans ce cas de transport combiné, la carrosserie est spécialement conçue pour des opérations répétées de transbordement à l'aide d'un système de levage par pinces, par exemple via des grues.

De sorte à repérer les zones de préhension prévues sur la carrosserie pour les pinces du système de levage, des bandes de repérage de couleur jaune sont apposées sur les flancs verticaux de la carrosserie.

Les bandes de repérage permettent de positionner correctement le système de levage relativement à des moyens de préhension spécialement prévus à cet effet sous le plancher et/ou sous les flancs verticaux de la carrosserie.

Classiquement, deux bandes de repérage avant et arrière sont apposées sur chaque flanc vertical de la carrosserie, la bande de repérage arrière étant localisée dans une zone située verticalement au-dessus des essieux du véhicule. Un tel véhicule est divulgué dans le document DE 20 2013 005354 U1.

Dans cette zone des essieux, il est également prévu de chaque côté de la carrosserie des garde-boues avant et arrière, et des jupes extérieures situées entre ces garde-boues de sorte à limiter les projections d'eau et les projections solides, par exemple des gravillons, par les roues lors du roulage du véhicule.

Cependant, la présence du moyen de préhension associé à la bande de repérage arrière de chaque flanc vertical impose de laisser subsister entre les jupes extérieures une large ouverture pour permettre le passage du système de levage.

Ceci favorise la sortie de projections lors du roulage du véhicule, ce qui réduit l'aspect sécuritaire pour les autres usagers du réseau routier.

En outre, ces projections provoquent des salissures au niveau des bandes de repérage des flancs situées juste au-dessus des roues. Ceci conduit à la dégradation voire à la disparition de ces bandes au bout de quelques mois.

Cette situation est particulièrement problématique car les bandes de repérage permettent de positionner correctement le système de levage relativement aux moyens de préhension spécialement prévus à cet effet sur la carrosserie. Un mauvais positionnement du système de levage peut engendrer la dégradation du véhicule, voire une destruction totale de celui-ci et des marchandises transportées si le système de levage se décroche lorsque la carrosserie est suspendue à plusieurs mètres de hauteur.

La présente invention vise à remédier à ces inconvénients.

L'invention concerne un véhicule de transport combiné de marchandises comprenant un châssis, au moins un essieu monté sur le châssis et supportant au moins deux roues opposées, une carrosserie montée sur le châssis, et au moins deux paires de garde-boues opposées et disposées latéralement de part et d'autre de la carrosserie. Chaque paire de garde-boue comprend des garde-boues avant et arrière espacés longitudinalement et entre lesquels est située l'une desdites deux roues dudit essieu.

Le sens « longitudinal » est utilisé en considérant le sens de la longueur du véhicule.

La carrosserie du véhicule comprend deux flancs verticaux, d'un pavillon et d'un plancher assemblés entre eux et délimitant un espace de chargement intérieur.

La carrosserie comprend également au moins une bande de repérage portée par un des flancs verticaux pour identifier une zone de préhension de la carrosserie et située verticalement au-dessus de l'espace longitudinal délimité entre les garde-boues avant et arrière de la paire de garde-boues située du côté dudit flanc vertical.

La carrosserie comprend encore au moins un moyen de préhension fixé sous le plancher et/ou sous ledit flanc vertical verticalement au-dessous de ladite bande de repérage pour la préhension de la carrosserie.

Selon une caractéristique générale, le véhicule comprend en outre une jupe extérieure s'étendant de façon continue longitudinalement entre les garde-boues avant et arrière de ladite paire de garde-boues.

Selon une autre caractéristique générale, une portion de la jupe extérieure située verticalement au-dessous dudit moyen de préhension est en retrait vers l'intérieur au moins par rapport à des portions longitudinales de la jupe extérieure disposées de part et d'autre de la portion en retrait.

Avec la conception particulière de la jupe extérieure, le risque de projections latérales d'eau ou de boue, ou encore de gravillons, dans la zone des garde-boues avant et arrière est limité lors du roulage du véhicule. En effet, la continuité de la jupe extérieure dans le sens longitudinal permet de conserver une fonction d'antiprojection même au niveau de la zone située verticalement en-dessous du moyen de préhension. Le risque de salissures sur la bande de repérage est ainsi fortement réduit.

Dans un mode de réalisation préféré, la portion en retrait de la jupe extérieure est décalée vers l'intérieur par rapport au reste de la jupe. Autrement dit, il existe une unique portion en retrait vers l'intérieur par rapport au reste de la jupe. Alternativement, il reste cependant possible de prévoir deux portions en retrait vers l'intérieur sur la jupe.

La portion en retrait de la jupe extérieure peut être fixée audit moyen de préhension de la carrosserie, et les portions longitudinales de la jupe extérieure peuvent être fixées sous ledit flanc vertical de la carrosserie.

De préférence, la carrosserie comprend une ceinture de finition montée à l'extrémité inférieure des flancs verticaux de la carrosserie et comprenant une pluralité de profilés. Dans ce cas, les portions longitudinales de la jupe extérieure peuvent être fixées sous les profilés de la ceinture de finition.

Avantageusement, le moyen de préhension de la carrosserie comprend des moyens de blocage dans le sens transversal de la portion en retrait de la jupe extérieure. Le moyen de préhension peut comprendre une embase fixée sous le plancher et/ou sous ledit flanc vertical de la carrosserie.

Dans un mode de réalisation, l'embase du moyen de préhension est pourvue d'ergots espacés dans le sens transversal de l'épaisseur de la portion en retrait de la jupe extérieure et formant les moyens de blocage.

Dans un autre mode de réalisation, l'embase du moyen de préhension délimite une rainure longitudinale orientée verticalement du côté opposé au plancher de la carrosserie et à l'intérieur de laquelle est engagée la portion en retrait de la jupe extérieure. La carrosserie peut comprendre en outre au moins patte de fixation montée à l'intérieur de la rainure pour fixer par coincement ladite portion en retrait de la jupe extérieure.

Pour faciliter son montage, il est possible de prévoir que la jupe extérieure soit déformable. A titre indicatif, la jupe extérieure peut être réalisée en PEHD extrudé.

De préférence, la jupe extérieure est montée en appui longitudinalement de part et d'autre contre les garde-boues avant et arrière de ladite paire de garde-boues. Ainsi, il n'existe ainsi aucune ouverture entre d'une part le garde-boue avant et la jupe extérieure, et d'autre part entre celle-ci et le garde-boue arrière.

La totalité de la jupe extérieure peut être décalée vers l'intérieur par rapport audit flanc vertical de la carrosserie.

L'épaisseur de la jupe extérieure peut être constante ou variable le long de sa longueur.

De préférence, la jupe extérieure est réalisée en une seule pièce. Alternativement, il est possible de prévoir que la jupe soit constituée de plusieurs parties assemblées entre elles. Dans ce cas, la jupe reste cependant également configurée pour s'étendre de façon continue dans le sens longitudinal.

Dans un mode de réalisation préféré, le véhicule comprend deux jupes extérieures latérales telles que définies précédemment et s'étendant chacune de façon continue longitudinalement entre les garde-boues avant et arrière de ladite paire de garde-boues associée.

Le véhicule peut comprendre en outre un tracteur équipé d'un groupe motopropulseur. Lorsque la carrosserie est attelée au tracteur, on parle de véhicule de type poids lourd ou camion. Le châssis et la carrosserie forment une remorque ou une semi-remorque.

Lorsque le véhicule comprend sur le même châssis le groupe motopropulseur et la carrosserie, on parle alors de véhicule porteur.

Dans la présente invention, par « véhicule routier de transport de marchandises », on entend une remorque ou une semi-remorque, ou un véhicule de type poids lourd ou encore un véhicule porteur.

La présente invention sera mieux comprise à la lecture de la description détaillée d'un mode de réalisation pris à titre d'exemple nullement limitatif et illustré par les dessins annexés sur lesquels :
[Fig 1] est une vue de côté d'une carrosserie selon un exemple de réalisation de l'invention,
[Fig 2] est une vue de détail en perspective de la figure 1,
[Fig 3] est une vue de détail de la figure 2,
[Fig 4] est une vue de détail de la figure 2 sur laquelle une jupe extérieure n'a pas été représentée,
[Fig 5] est une vue en coupe selon l'axe V-V de la figure 3, et
[Fig 6] est une vue en coupe selon l'axe VI-VI de la figure 3.

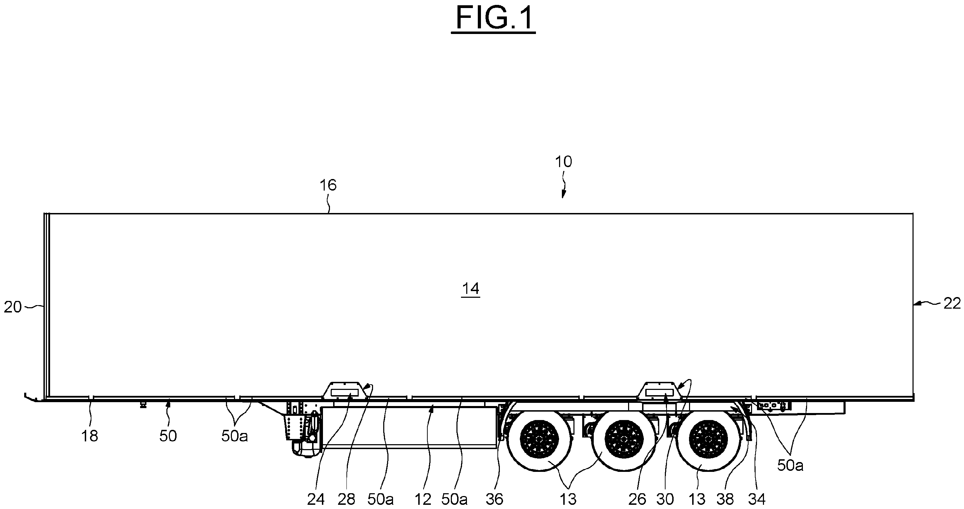

Sur la figure 1, on a représenté un véhicule comprenant une carrosserie 10 et un châssis 12 porteur s'étendant longitudinalement et équipé de roues 13. La carrosserie 10 est montée sur le châssis 12. Dans l'exemple de réalisation illustré, la carrosserie 10 est destinée à être attelé à un tracteur (non représenté) du véhicule qui est équipé d'un groupe motopropulseur.

La carrosserie 10 comprend deux flancs 14 verticaux opposés s'étendant longitudinalement (un seul étant visible sur les figures), un plafond ou pavillon 16, un plancher 18, une face avant 20 et un cadre arrière nommé custode (non visible) qui sont assemblés entre eux et qui délimitent un espace de chargement intérieur.

La carrosserie 10 comprend également un dispositif de fermeture 22 d'une ouverture ou accès arrière à l'espace de chargement intérieur. Le dispositif 22 peut comprendre une porte à un ou plusieurs battants articulés à rotation, ou encore un rideau coulissant. Dans l'exemple de réalisation illustré, le dispositif de fermeture 22 permet d'ouvrir ou de fermer un accès arrière à l'espace de chargement intérieur. Alternativement ou en combinaison, il est possible de prévoir un dispositif de fermeture permettant d'ouvrir ou de fermer un accès latéral à l'espace de chargement intérieur prévu au niveau d'un des flancs longitudinaux de la carrosserie.

La carrosserie 10 comprend également deux bandes de repérage 24, 26 portées du côté extérieur par chacun des flancs 14 pour identifier des zones de préhension avant et arrière de la carrosserie. Les bandes de repérage 24, 26 forment des bandes de repérage avant et arrière portées sur ledit flanc 14.

Dans l'exemple de réalisation illustré, la carrosserie 10 comprend également deux plaques de protection 28, 30 associées chacune à une des bandes de repérage 24, 26. Les plaques 28, 30 assurent deux fonctions de protection, à savoir la protection du flanc 14 et de la bande de repérage 24, 26 associée. Alternativement, il est possible de ne pas prévoir les plaques de protection 28, 30.

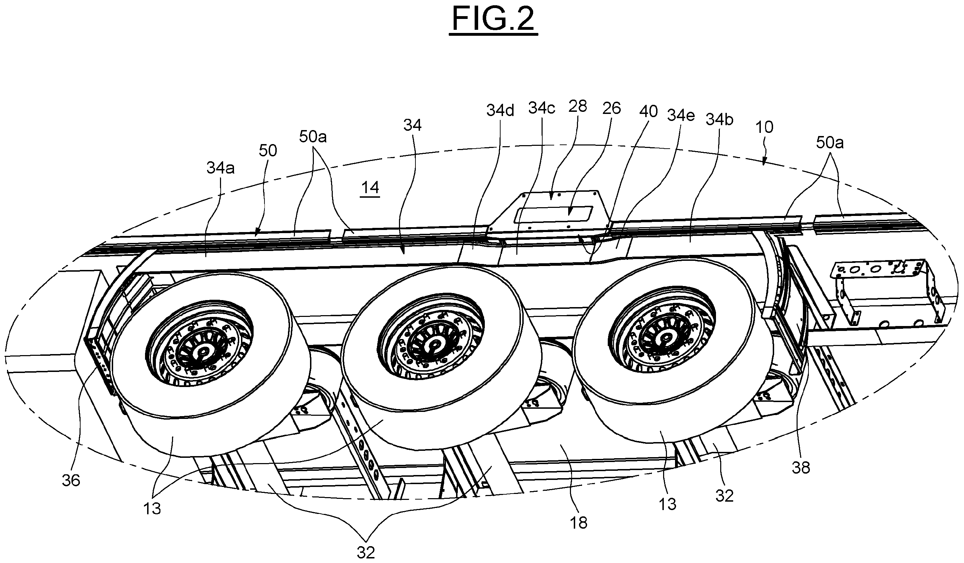

Comme cela est visible à la figure 2, le véhicule comprend également une pluralité d'essieux 32 équipés chacun de deux roues 13 opposées. De manière connue en soi, chaque essieu 32 est supporté par un bras de suspension (non référencé) articulé à rotation sur le châssis 12. Dans l'exemple de réalisation illustré, les essieux 32 sont au nombre de trois. En variante, il est possible de prévoir un nombre différent d'essieu(x).

Le véhicule comprend encore deux paires de garde-boues opposées et disposées latéralement de part et d'autre de la carrosserie 10 pour limiter les projections des roues 13 opposées de chaque essieu 32 lors du roulage du véhicule.

Comme cela sera décrit plus en détail par la suite, le véhicule comprend encore dans ce but deux jupes 34 extérieures arrière opposées et disposées latéralement de part et d'autre de la carrosserie 10. Chaque jupe 34 extérieure est associée à une des paires de garde-boues. Une seule paire de garde-boues et une seule jupe 34 extérieure sont visibles sur les figures 1 et 2.

Chaque paire de garde-boues comprend un garde-boue avant 36 et un garde-boue arrière 38 qui est espacé du garde-boue avant dans le sens longitudinal vers l'arrière. Les garde-boues avant 36 et arrière 38 sont fixés sous le plancher 18 de la carrosserie. Les garde-boues avant 36 et arrière 38 restent latéralement en retrait du flanc 14 adjacent.

Un espace longitudinal (non référencé) est délimité entre les garde-boues avant 36 et arrière 38 de chaque paire de garde-boues. Les roues 13 situées d'un même côté de la carrosserie sont situées dans l'espace longitudinal délimité entre les garde-boues avant 36 et arrière 38 de la paire de garde-boues associée.

La bande de repérage 26 de chaque flanc 14 de la carrosserie est située verticalement au-dessus de l'espace longitudinal délimité entre les garde-boues avant 36 et arrière 38 de la paire de garde-boues associée située du côté de ce flanc. L'autre bande de repérage 24 (figure 1) de chaque flanc 14 est décalée vers l'avant de la carrosserie.

Comme indiqué précédemment, la bande de repérage 26 arrière portée par le flanc 14 de la carrosserie est prévue pour identifier une zone de préhension arrière prévue sur celle-ci.

Comme illustré plus visiblement aux figures 2 à 4, la carrosserie 10 comprend une platine 40 fixée sous le plancher 18 et sous le flanc 14 vertical verticalement à l'aplomb de la bande de repérage 26 arrière pour pouvoir réaliser la préhension de la carrosserie à l'aide d'un système de levage par pinces. Alternativement, la platine 40 peut être fixée uniquement sous le plancher 18 ou sous le flanc 14 vertical. La platine 40 forme un moyen de préhension de la carrosserie.

Comme indiqué précédemment, chaque jupe 34 extérieure est associée à une des paires de garde-boues avant 36 et arrière 38. Chaque jupe 34 extérieure s'étend de façon continue dans le sens longitudinal entre les garde-boues avant 36 et arrière 38 associés. Une unique jupe 34 s'étend entre les garde-boues avant 36 et arrière 38 associés.

En outre, dans l'exemple de réalisation illustré, chaque jupe 34 extérieure vient à une extrémité avant en contact dans le sens longitudinal contre le garde-boue avant 36 associé, et vient à une extrémité arrière opposée en contact dans le sens longitudinal contre le garde-boue arrière 38 associé. Il n'existe ainsi aucune ouverture entre les extrémités de chaque jupe 34 extérieure et les garde-boues avant 36 et arrière 38 associés.

Chaque jupe 34 extérieure est pourvue d'une première portion longitudinale 34a comprenant l'extrémité avant de la jupe, d'une deuxième portion 34b longitudinale comprenant l'extrémité arrière, et d'une portion 34c s'étendant entre les première et deuxième portions en étant en retrait vers l'intérieur du véhicule. Les première et deuxième portions longitudinales 34a, 34b sont disposées longitudinalement de part et d'autre de la portion 34c en retrait.

Chaque jupe 34 extérieure est également pourvue d'une première portion de raccordement 34d reliant la première portion 34a longitudinale à la portion 34c en retrait, et d'une deuxième portion de raccordement 34e reliant la deuxième portion 34b longitudinale à la portion 34c en retrait.

Dans l'exemple de réalisation illustré, la portion 34c en retrait est décalée transversalement vers l'intérieur par rapport au reste de la jupe extérieure.

Les première et deuxième portions 34a, 34b longitudinales sont situés dans un même plan vertical qui est parallèle au plan longitudinal médian du véhicule. Les première et deuxième portions 34a, 34b s'étendent de façon rectiligne. La portion 34c en retrait est située dans un autre plan vertical qui est décalé vers l'intérieur par rapport au plan vertical dans lequel sont situés les première et deuxième portions 34a, 34b, et qui est aussi parallèle au plan longitudinal médian du véhicule. La portion intermédiaire 34c s'étend de façon rectiligne.

Dans l'exemple de réalisation illustré, les première et deuxième portions de raccordement 34d, 34e présente une forme incurvée. Alternativement, les portions de raccordement pourraient présenter d'autre formes, par exemple rectiligne. Dans ce cas, les portions de raccordement pourraient s'étendre obliquement ou transversalement.

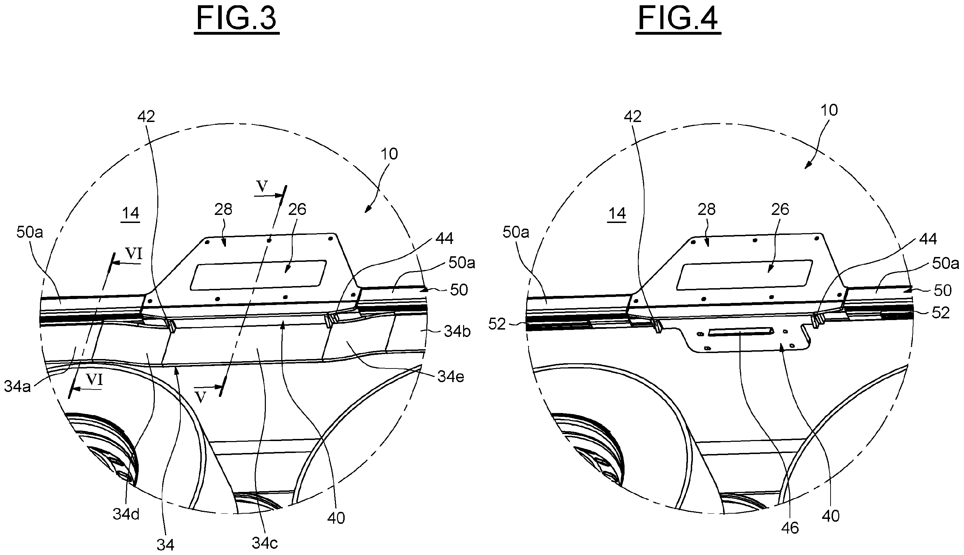

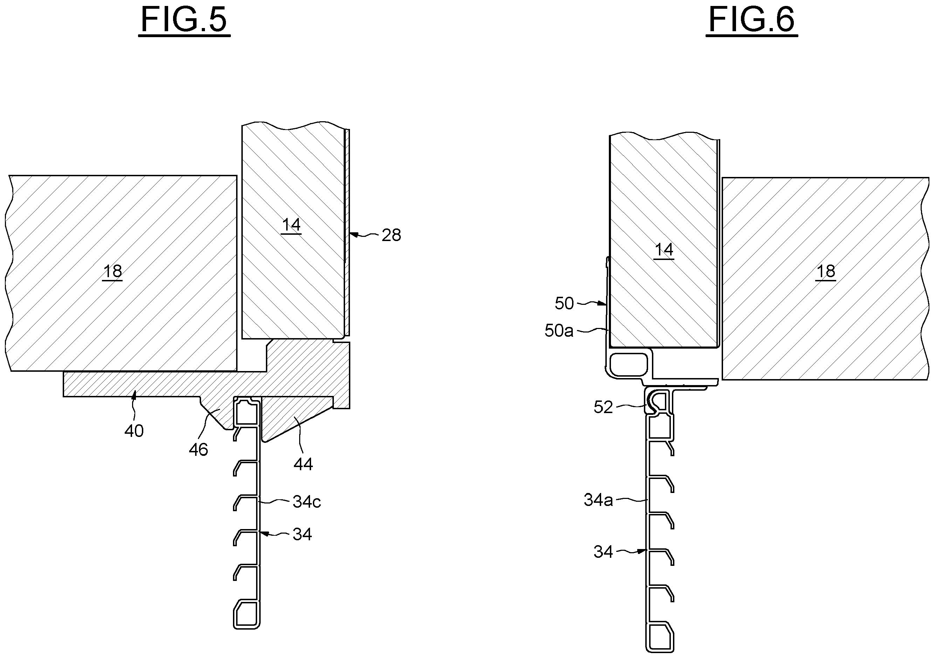

Comme illustré plus visiblement aux figures 4 et 5, la platine 40 est pourvue de deux ergots 42 avant et 44 arrière alignés longitudinalement, s'étendant en saillie vers le bas, i.e. du côté opposé au plancher 18 de la carrosserie, et d'un ergot 46 central disposé longitudinalement entre les ergots 42 et 44 s'étendant aussi en saillie vers le bas et décalé vers l'intérieur par rapport à ceux-ci.

L'espacement dans le sens transversal de l'ergot 46 par rapport aux ergots 42, 44 est égal à l'épaisseur de la portion 34c en retrait de la jupe extérieure. Les ergots 42 à 46 de la platine assurent le blocage dans le sens transversal de la portion 34c en retrait de la jupe extérieure.

En se référant de nouveau aux figures 1 et 2, la carrosserie 10 comprend une ceinture de finition 50 fixée à l'extrémité inférieure de chaque flanc 14 latéral et comprenant une pluralité de profilés 50a espacés les uns par rapport aux autres dans le sens longitudinal. Dans l'exemple de réalisation, la plaque de protection 28 arrière est fixée sur le flanc 14 latéral associé entre deux profilés 50a successifs de la ceinture de finition 50. Alternativement, il reste possible de fixer la plaque de protection 28 contre la ceinture de finition 50. Dans ce cas, la ceinture de finition 50 peut être réalisée en une seule pièce ou comprendre une pluralité de profilés disposés côte à côte. Ceci est également possible lorsqu'il n'est pas prévu de plaque de protection 28 associé à la bande de repérage 26.

La jupe 34 extérieure associée à chaque paire de garde-boues est fixée à la platine 40 et sous le flanc 14 associé. La portion 34c en retrait de la jupe est fixée à la platine 40 et les première et deuxième portions longitudinales 34a, 34b sont fixées sous le flanc 14 associé.

Comme indiqué précédemment, la portion 34c en retrait de la jupe 34 extérieure est bloquée dans le sens transversal par les ergots 42 à 46 de la platine. Des vis transversales (non représentées) peuvent être prévues pour fixer la portion 34c de la jupe à l'ergot 46 central. Alternativement, il est possible de prévoir d'autres types de fixation, par exemple par collage.

Les première et deuxième portions longitudinales 34a, 34b de la jupe sont fixées sous les profilés 50a de la ceinture de finition. Dans ce but, des profilés 52 (figures 4 et 6) sont fixés sous les profilés 50a de la ceinture de finition et à l'intérieur desquels sont fixées par emboîtement les première et deuxième portions longitudinales 34a, 34b de la jupe.

La jupe 34 extérieure est de préférence réalisée en matière plastique, notamment par extrudage. La jupe 34 peut par exemple être réalisé en PEHD extrudé. Alternativement, il est possible de réaliser la jupe 34 dans d'autres matériaux, par exemple en aluminium.

L'invention a été illustrée à titre d'exemple sur la base d'un véhicule routier de transport équipé d'une semi-remorque. Comme indiqué précédemment, l'invention est aussi applicable à d'autres types de véhicules routiers, par exemple un porteur ou remorque.

## Revendications

1. Véhicule de transport combiné de marchandises comprenant un châssis (12), au moins un essieu (32) monté sur le châssis et supportant au moins deux roues (13) opposées, une carrosserie (10) montée sur le châssis, et au moins deux paires de garde-boues opposées et disposées latéralement de part et d'autre de la carrosserie, chaque paire de garde-boue comprenant des garde-boues avant (36) et arrière (38) espacés longitudinalement et entre lesquels est située l'une desdites deux roues dudit essieu, la carrosserie étant pourvue :
- de deux flancs (14) verticaux, d'un pavillon (16) et d'un plancher (18) assemblés entre eux et délimitant un espace de chargement intérieur,
- d'au moins une bande de repérage (26) portée par un des flancs (14) verticaux pour identifier une zone de préhension de la carrosserie et située verticalement au-dessus de l'espace longitudinal délimité entre les garde-boues avant (36) et arrière (38) de la paire de garde-boues située du côté dudit flanc vertical, et
- d'au moins un moyen de préhension (40) fixé sous le plancher (18) et/ou sous ledit flanc vertical verticalement au-dessous de ladite bande de repérage (26) pour la préhension de la carrosserie, **caractérisé en ce que** le véhicule comprend en outre une jupe (34) extérieure s'étendant de façon continue longitudinalement entre les garde-boues avant (36) et arrière (38) de ladite paire de garde-boues, une portion (34c) de la jupe extérieure située verticalement au-dessous dudit moyen de préhension (40) étant en retrait vers l'intérieur au moins par rapport à des portions longitudinales (34a, 34b) de la jupe extérieure disposées de part et d'autre de la portion (34c) en retrait.

2. Véhicule selon la revendication 1, dans lequel la portion (34c) en retrait de la jupe extérieure est décalée vers l'intérieur par rapport au reste de la jupe.

3. Véhicule selon la revendication 1 ou 2, dans lequel la portion (34c) en retrait de la jupe extérieure est fixée audit moyen de préhension (40) de la carrosserie et les portions longitudinales (34a, 34b) de la jupe extérieure sont fixées sous ledit flanc (14) vertical de la carrosserie.

4. Véhicule selon la revendication 3, dans lequel la carrosserie (10) comprend une ceinture de finition (38) montée à l'extrémité inférieure des flancs (14) verticaux de la carrosserie et comprenant une pluralité de profilés (38a), les portions longitudinales (34a, 34b) de la jupe extérieure étant fixées sous les profilés (38a) de la ceinture de finition.

5. Véhicule selon l'une quelconque des revendications précédentes, dans lequel le moyen de préhension (40) de la carrosserie comprend des moyens de blocage (42, 44, 46) dans le sens transversal de la portion (34c) en retrait de la jupe extérieure.

6. Véhicule selon la revendication 5, dans lequel le moyen de préhension (40) de la carrosserie comprend une embase fixée sous le plancher (18) et/ou sous ledit flanc vertical de la carrosserie et pourvue d'ergots (42, 44, 46) espacés dans le sens transversal de l'épaisseur de la portion (34c) en retrait de la jupe extérieure et formant les moyens de blocage.

7. Véhicule selon l'une quelconque des revendications précédentes, dans lequel la jupe (34) extérieure est déformable.

8. Véhicule selon l'une quelconque des revendications précédentes, dans lequel la jupe (34) extérieure est réalisée en PEHD extrudé.

9. Véhicule selon l'une quelconque des revendications précédentes, dans lequel la jupe (34) extérieure est montée en appui longitudinalement de part et d'autre contre les garde-boues avant (36) et arrière (38) de ladite paire de garde-boues.

10. Véhicule selon l'une quelconque des revendications précédentes, dans lequel la totalité de la jupe (34) extérieure est décalée vers l'intérieur par rapport audit flanc vertical de la carrosserie.

11. Véhicule selon l'une quelconque des revendications précédentes, dans lequel la jupe (34) extérieure est réalisée en une seule pièce.

## Patentansprüche

1. Fahrzeug für den kombinierten Gütertransport, das ein Fahrgestell (12), mindestens eine Achse (32), die auf dem Fahrgestell montiert ist und mindestens zwei gegenüberliegende Räder (13) trägt, eine Karosserie (10), die auf das Fahrgestell montiert ist, und mindestens zwei gegenüberliegende Paare Radabdeckungen umfasst, die seitlich auf beiden Seiten der Karosserie angeordnet sind, wobei jedes Paar Radabdeckungen eine vordere (36) und eine hintere (38) Radabdeckung umfasst, die in Längsrichtung beabstandet sind und zwischen denen sich eines der beiden Räder der Achse befindet, wobei die Karosserie mit Folgendem versehen ist:
- zwei vertikalen Seitenwänden (14), einem Dach (16) und einem Boden (18), die zusammengebaut sind und einen inneren Laderaum begrenzen,
- mindestens einen Markierungsstreifen (26), der von einer der vertikalen Seitenwänden (14) getragen wird, um einen Griffbereich der Karosserie zu kennzeichnen, und der sich vertikal über dem Längsraum befindet, der zwischen der vorderen (36) und der hinteren (38) Radabdeckung des Paars Radabdeckungen begrenzt ist, das sich auf der Seite der vertikalen Seitenwand befindet, und
- mindestens ein Griffmittel (40), das unter dem Boden (18) und/oder unter der vertikalen Seitenwand vertikal unter dem Markierungsstreifen (26) zum Greifen der Karosserie befestigt ist, **dadurch gekennzeichnet, dass** das Fahrzeug ferner eine Außenschürze (34) umfasst, die sich derart erstreckt, dass sie in Längsrichtung zwischen der vorderen (36) und der hinteren (38) Radabdeckung des Paars Radabdeckungen durchgehend ist, wobei ein Abschnitt (34c) der Außenschürze, der sich vertikal unter dem Griffmittel (40) befindet, mindestens in Bezug auf Längsabschnitte (34a, 34b) der Außenschürze, die auf beiden Seiten des vertieften Abschnitts (34c) angeordnet sind, nach innen vertieft ist.

2. Fahrzeug nach Anspruch 1, wobei der vertiefte Abschnitt (34c) der Außenschürze im Verhältnis zum Rest der Schürze nach innen versetzt ist.

3. Fahrzeug nach Anspruch 1 oder 2, wobei der vertiefte Abschnitt (34c) der Außenschürze an dem Griffmittel (40) der Karosserie befestigt ist und die Längsabschnitte (34a, 34b) der Außenschürze unter der vertikalen Seitenwand (14) der Karosserie befestigt sind.

4. Fahrzeug nach Anspruch 3, wobei die Karosserie (10) einen Abschlussgurt (38) umfasst, das am unteren Ende der vertikalen Seitenwänden (14) der Karosserie montiert ist und eine Vielzahl von Profilelementen (38a) umfasst, wobei die Längsabschnitte (34a, 34b) der Außenschürze unter den Profilelementen (38a) des Abschlussgurts befestigt sind.

5. Fahrzeug nach einem der vorhergehenden Ansprüche, wobei das Griffmittel (40) der Karosserie Verriegelungsmittel (42, 44, 46) in Querrichtung des vertieften Abschnitts (34c) der Außenschürze umfasst.

6. Fahrzeug nach Anspruch 5, wobei das Griffmittel (40) der Karosserie eine Basis umfasst, die unter dem Boden (18) und/oder unter der vertikalen Seitenwand der Karosserie befestigt und mit Vorsprüngen (42, 44, 46) versehen ist, die in Querrichtung der Dicke des vertieften Abschnitts (34c) der Außenschürze beabstandet sind und die Verriegelungsmittel bilden.

7. Fahrzeug nach einem der vorhergehenden Ansprüche, wobei die Außenschürze (34) verformbar ist.

8. Fahrzeug nach einem der vorhergehenden Ansprüche, wobei die Außenschürze (34) aus extrudiertem HDPE hergestellt ist.

9. Fahrzeug nach einem der vorhergehenden Ansprüche, wobei die Außenschürze (34) so montiert ist, dass sie in Längsrichtung auf beiden Seiten gegen die vordere (36) und die hintere (38) Radabdeckung des Paars Radabdeckungen drückt.

10. Fahrzeug nach einem der vorhergehenden Ansprüche, wobei die gesamte Außenschürze (34) im Verhältnis zur vertikalen Seitenwand der Karosserie nach innen versetzt ist.

11. Fahrzeug nach einem der vorhergehenden Ansprüche, wobei die Außenschürze (34) einstückig hergestellt ist.

## Claims

1. A combined goods transport vehicle comprising a chassis (12), at least one axle (32) mounted on the chassis and supporting at least two opposite wheels (13), a bodywork (10) mounted on the chassis, and at least two pairs of mudguards which are opposite and disposed laterally on either side of the bodywork, each pair of mudguards comprising front (36) and rear (38) mudguards spaced longitudinally and between which is located one of said two wheels of said axle, the bodywork being provided:
- with two vertical sidewalls (14), a roof (16) and a floor (18) assembled together and delimiting an interior loading space,
- with at least one marking strip (26) carried by one of the vertical sidewalls (14) to identify a gripping area of the bodywork and located vertically above the longitudinal space delimited between the front (36) and rear (38) mudguards of the pair of mudguards located on the side of said vertical sidewall, and
- with at least one gripping means (40) fixed under the floor (18) and/or under said vertical sidewall vertically below said marking strip (26) for gripping the bodywork, **characterized in that** the vehicle further comprises an outer skirt (34) extending continuously longitudinally between the front (36) and rear (38) mudguards of said pair of mudguards, a portion (34c) of the outer skirt located vertically below said gripping means (40) being recessed towards the inside at least with respect to longitudinal portions (34a, 34b) of the outer skirt disposed on either side of the recessed portion (34c).

2. The vehicle according to claim 1, wherein the recessed portion (34c) of the outer skirt is offset inwards with respect to the rest of the skirt.

3. The vehicle according to claim 1 or 2, wherein the recessed portion (34c) of the outer skirt is fixed to said gripping means (40) of the bodywork and the longitudinal portions (34a, 34b) of the outer skirt are fixed under said vertical sidewall (14) of the bodywork.

4. The vehicle according to claim 3, wherein the bodywork (10) comprises a finishing belt (38) mounted at the lower end of the vertical sidewalls (14) of the bodywork and comprising a plurality of profiles (38a), the longitudinal portions (34a, 34b) of the outer skirt being fixed under the profiles (38a) of the finishing belt.

5. The vehicle according to any one of the preceding claims, wherein the gripping means (40) of the bodywork comprises blocking means (42, 44, 46) in the transverse direction of the portion (34c) recessed with respect the outer skirt.

6. The vehicle according to claim 5, wherein the gripping means (40) of the bodywork comprises a base fixed under the floor (18) and/or under said vertical sidewall of the bodywork and provided with lugs (42, 44, 46) spaced in the transverse direction of the thickness of the portion (34c) recessed with respect to the outer skirt and forming the blocking means.

7. The vehicle according to any one of the preceding claims, wherein the outer skirt (34) is deformable.

8. The vehicle according to any one of the preceding claims, wherein the outer skirt (34) is made of extruded HDPE.

9. The vehicle according to any one of the preceding claims, wherein the outer skirt (34) is mounted to bear longitudinally on either side against the front (36) and rear (38) mudguards of said pair of mudguards.

10. The vehicle according to any one of the preceding claims, wherein the entire outer skirt (34) is offset inwards with respect to said vertical sidewall of the bodywork.

11. The vehicle according to any one of the preceding claims, wherein the outer skirt (34) is made in one piece.
